# EUROPEAN PATENT APPLICATION

(11) **EP 4 282 687 A1**
(43) Date of publication of application: **29.11.2023**
(21) Application number: 23173273.6
(22) Date of filing: 15.05.2023
(51) Int. Cl.: B60K 37/06, G06F 3/03

(54) **CONTROL SYSTEM**

(30) Priority: 27.05.2022 ES 202230455
(71) Applicant: Seat, S.A., 08760 Martorell (ES)
(72) Inventor: MORALES FERNÁNDEZ, Daniel, 08760 MARTORELL (ES)
(74) Representative: Ponti & Partners, S.L.P

(57) **Abstract**

The present invention relates to a control system, comprising:
- a screen (P1) with first elements (M1) arranged below the same according to a first group (G1_{M1}) and a second group (G2_{M1}), spaced linearly apart;
- a rotary actuator (K) which is fixed to the screen (P1) by means of magnetic attraction between the first elements (M1) and the second elements (M2), alternatively, in a first location (U1) and a second location (U2) located on the first group (G1_{M1}) and the second group (G2_{M1}), and which moves in a rotatable manner when the same is in the first location (U1) and the second location (U2);
- a sensor (S) to detect the angular position of the rotary actuator (K); and
- a control unit (C) to control operating parameters or variables of one or more devices, depending on whether the rotary actuator (K) is in the first location (U1) or in the second location (U2).

## Description

### Technical field

The present invention relates to a control system comprising a screen and a rotary actuator magnetically fixed to the screen with freedom of rotation, and particularly to a control system which allows distinguishing two or more actuation areas for positioning the rotary actuator on the screen, in order to control different operating parameters or variables of a device or identical or different operating parameters or variables of two or more devices.

The invention applies particularly, although in a non-limiting manner, for controlling the devices of a vehicle.

### State of the Art

Control systems comprising the features of the preamble of claim 1 of the present invention are known.

This is the case of the system described in patent EP2444736B1, with the control system in this case being applied for controlling an electrical home appliance, such as a ceramic cooktop.

In the control system described in EP2444736B1, the rotary actuator can only be arranged in a specific position on a small screen of a control panel in which it is magnetically fixed, and only in this specific position does the rotation of the rotary actuator translate into the control of an operating control or variable, in this case of the electrical home appliance.

In the control system of EP2444736B1, the inclination of the rotary actuator allows complementing the control provided by the rotation thereof, for example, selecting another cooking area on a ceramic cooktop by means of such inclination, and controlling an operating parameter of the selected cooking area by means of such rotation.

However, to control the rest of the operating parameters or variables, the control system described in EP2444736B1 must have other additional actuators, in this case stationary actuators, such as a tactile control panel arranged close to the small screen, and must display graphical operating information, in addition to the information displayed on the small screen, by means of additional display units formed by respective supports marked with symbols and backlit, which are arranged adjacent to the small screen.

It is therefore necessary to offer an alternative to the state of the art which covers the shortcomings found therein by means of providing a control system that does not present the known drawbacks and that therefore allows controlling different operating parameters or variables with a single rotary actuator, dispensing with such additional actuators, as well as dispensing with such additional display units.

### Description of the Invention

To that end, the present invention relates to a control system, comprising:
- a control panel comprising a screen that displays graphical information relating to at least one operating parameter or variable of a device, wherein said control panel includes, arranged below it, first elements configured to attract and/or to be attracted magnetically;
- a rotary actuator comprising second elements configured to attract and/or to be attracted magnetically, configured and arranged to fix said rotary actuator to said control panel, on said screen, by means of magnetic attraction between the first elements and the second elements with an attractive force that allows the relative rotational movement of the rotary actuator with respect to the control panel;
- at least one sensor configured and arranged to detect at least the angular position or a change in the angular position of said rotary actuator during said relative rotational movement thereof; and
- a control unit operatively connected with said at least one sensor to receive detection signals from the same, and based on the signals, to control the operation of said device, in relation to said at least one operating parameter or variable.

Unlike the control systems of the prior art, in the system proposed by the present invention:
- the first elements are arranged below the screen, forming at least a first group and a second group of first elements, spaced linearly apart from one another;
- the rotary actuator is configured to be fixed to the screen, alternatively, in at least a first location and a second location located, respectively, on said first group and second group, and to move on the screen and with respect to the screen:
   - in a rotatable manner when it is arranged in said first location, and
   - in a rotatable manner when it is arranged in said second location;
   and
- the control unit is configured to distinguish, based on the detection signals received from the at least one sensor, whether the rotary actuator is arranged in the first location or in the second location, and based on the same:
   alternatively control the operation of two different operating parameters or variables of said device, associated with the first location and the second location, respectively; or
   alternatively control the operation of two identical or different operating parameters or variables, associated with the first location and the second location, respectively, of two respective devices.

In that sense, the present invention provides a control system which, unlike the state of the art identified in the preceding section, provides a larger screen and allows dispensing with additional display units and their respective additional actuators. In that sense, it is possible to simplify the complexity and the number of components of the system by means of different actuation areas that are spaced linearly apart, in which the rotary actuator can be arranged to control different variables or parameters.

According to one embodiment, the at least one sensor is configured to also detect the direction of rotation of the rotary actuator during the relative rotational movement thereof, both in the first location and in the second location. Accordingly, and in a particular application for those sensors configured to detect a change in the angular position of the rotary actuator, detection of the direction of rotation of the rotary actuator allows incrementally modifying the operating parameter or variable, such as the volume levels of a sound system or the blowing intensity levels of an air-conditioning system, allowing said operating parameter or variable to be increased or decreased.

For one embodiment, the rotary actuator is configured to be fixed to the screen and to move on and with respect to the screen linearly between the first location and the second location. This thereby allows the rotary actuator not to be separated from the screen for the movement thereof between first location and the second location.

For an implementation of said embodiment, one or more of the first elements are arranged below the screen according to at least one linear arrangement running at least between the first group and the second group of first elements, and providing a linear guide for the rotary actuator to move linearly at least between the first location and the second location while it remains fixed on the screen by means of magnetic attraction between the first elements of the linear arrangement and the second elements. A magnetic attraction is generated between the rotary actuator and the first elements in order to generate a guiding during the linear movement between the first location and the second location, avoiding the need to separate the rotary actuator from the screen.

According to one embodiment, the at least one sensor comprises sensors arranged below the screen, including at least a first sensor or a first group of sensors, arranged below the first location, and a second sensor or a second group of sensors, arranged below the second location, spaced linearly apart from one another, and wherein the control unit is configured to distinguish the detection signals received from the first sensor or sensors in the first group from the signals received from the second sensor or sensors in the second group.

According to an implementation of said embodiment, at least one of the sensors is arranged below the screen according to at least one linear arrangement running at least between the first group and the second group of sensors, and wherein the control unit is configured to also distinguish the detection signals received from the sensor or sensors of said linear arrangement from the detection signals received from the rest of the sensors, and based on the same, control the operation of another parameter or variable of said device or of another device, other than said two operating parameters or variables. Accordingly, in addition to the guiding of the rotary actuator between the first location and the second location, the control system allows controlling an additional operating parameter or variable during said linear movement between the first location and the second location.

For one embodiment, the control system of the present invention comprises blocking elements which can be controlled by the control unit to block the linear movement of the rotary actuator when it is in the first location or the second location, preventing it from moving linearly on the screen.

According to an implementation of said embodiment, the control unit is configured to determine that the operation to be controlled by arranging the rotary actuator in the first location or in the second location is inactive, and control the blocking elements in order to prevent the rotary actuator from moving linearly to the first location or the second location, associated with said inactive operation. Accordingly, when an operating parameter or variable is not available for actuation, the control unit is configured to block the linear movement of the rotary actuator in a specific first or second location. The user is therefore spared from moving the rotary actuator to an area of the screen the control of which is disabled. In contrast, the possibility of the rotary actuator being moved by means of a relative rotational movement with respect to the control panel is maintained, allowing the control of the operating parameter or variable associated with the actual location of the rotary actuator.

For another embodiment, the control system of the present invention comprises blocking elements which can be controlled by the control unit to block the relative rotational movement of the rotary actuator when it is in the first location or the second location, preventing it from moving according to a rotary movement on the screen.

According to an implementation of said embodiment, the control unit is configured to determine that the operation to be controlled by arranging the rotary actuator in the first location or in the second location is inactive, and control the blocking elements to prevent the rotary actuator from moving in a rotatable manner in said first location or second location, associated with said inactive operation. Accordingly, when an operating parameter or variable is not available for actuation, the control unit is configured to block the rotary movement of the rotary actuator in a specific first or second location. The user is therefore spared from rotating the rotary actuator, with the control thereof being disabled. In contrast, the possibility of the rotary actuator being moved by means of a linear movement with respect to the control panel between a first location and the second location is maintained.

According to a variant of said implementations, the blocking elements are electromagnets arranged below the screen grouped in positions respectively adjacent to the first group and the second group of first elements, the control unit being operatively and electrically connected with said electromagnets to activate/deactivate the same, generating a repulsive magnetic field when they are activated. Said repulsive field can prevent both the linear movement and the rotational movement of the rotary actuator, depending on its position in the control panel.

According to one embodiment, the first elements are electromagnets, the control unit being operatively and electrically connected with said electromagnets to at least activate/deactivate the same.

For an implementation of said embodiment, the blocking elements are the actual first elements of the first group and the second group of first elements, which are electromagnets, the control unit also being configured to control the module of the magnetic field generated by the electromagnets, including a larger module that blocks at least the linear movement of the rotary actuator and a smaller module that allows the linear movement of the rotary actuator.

For another implementation of said embodiment, the blocking elements are the actual first elements of the first group and the second group of first elements, which are electromagnets, the control unit also being configured to control the module of the magnetic field generated by the electromagnets, including a larger module that blocks at least the rotational movement of the rotary actuator and a smaller module that allows the rotational movement of the rotary actuator.

According to one embodiment, the rotary actuator comprises, in a central portion thereof, an optical element configured and arranged to display an image of a graphical representation displayed by the screen right below the optical element.

For an implementation of said embodiment, the mentioned optical element comprises a group of optical fibres with lower ends arranged in a lower plane of the rotary actuator which, when the rotary actuator is fixed to the screen, are located right above the same, and upper ends arranged in an upper plane of the rotary actuator, visible from the outside, with the image of said graphical representation being optically transmitted by said group of optical fibres from the lower ends thereof to the upper ends thereof. The display of the information depicted by the screen of the control panel arranged right below the rotary actuator is thereby improved. Without requiring an additional display in the upper part of the rotary actuator and by means of the optical fibres, the same information displayed by the screen of the control panel is transferred to the upper surface of the rotary actuator so that a user can view it properly.

For some embodiments, the rotary actuator cannot be removed from the screen, so it includes the linear guides described above. For example, this is the case when the control system is installed in a vehicle so that, in the event of an impact, it will not be able to propel into the cabin, where it may cause injuries to the passengers. Therefore, the magnetic attraction force between the first elements and the second elements is, in this case, high enough so as to prevent the removal or separation of the rotary actuator from the screen.

According to an alternative embodiment, the rotary actuator, the first elements, and the second elements are configured so that the fixation of the rotary actuator to the screen is detachable.

According to an implementation of said embodiment, the control system of the present invention comprises a support surface or an additional screen which also includes, arranged below it:
- first elements configured to attract and/or to be attracted magnetically, for the detachable fixation of the rotary actuator, by means of magnetic attraction between the first elements and the second elements with an attractive force that allows the relative rotational movement of the rotary actuator with respect to said support surface or additional screen but does not prevent the removal of the rotary actuator from the screen by exerting a certain force; and
- at least one sensor configured and arranged to detect at least the angular position or a change in the angular position of said rotary actuator during said relative rotational movement thereof with respect to the support surface or additional screen;
with the control unit being operatively connected with said at least one sensor to receive detection signals from the same, and in response to receiving said detection signals and to the value thereof, allow and carry out, respectively, the control of an operating parameter or variable of said device or of another device. According to said embodiment, one and the same rotary actuator can be magnetically linked with another additional screen, where at least one operating parameter or variable associated with said additional screen can be controlled.

According to one embodiment, the at least one sensor is at least one contactless sensor.

According to an implementation of said embodiment, the at least one contactless sensor is at least one magnetic sensor.

Although the control system of the present invention is applicable for controlling any type of device which can be controlled by means of the system, such as an electrical home appliance (ceramic cooktop, multimedia device, etc.), according to a preferred embodiment, the device or devices to be controlled by means of the control system of the present invention is a device or devices of a vehicle, such as a temperature-control device, a multimedia device, etc.

### Brief Description of the Drawings

The foregoing and other advantages and features will be better understood based on the following detailed description of several embodiments in reference to the attached drawings, which must be interpreted in an illustrative and non-limiting manner and in which:
Figure 1 is a schematic view of the control system of the present invention for one embodiment. The depiction of the rotary actuator has been omitted from this view so as not to conceal any of the illustrated elements.
Figure 2 schematically shows a part of the control system of the present invention for the same embodiment as Figure 1, including the rotary actuator arranged in a first location.
Figure 3 schematically shows a part of the control system of the present invention for another embodiment, including blocking elements for blocking the linear movement of the rotary actuator. The depiction of the rotary actuator has been omitted from this view for the same reasons as in Figure 1.
Figure 4 schematically shows a part of the control system of the present invention for the same embodiment as Figure 3, including the rotary actuator arranged and blocked in a first location.
Figure 5 schematically shows a part of the control system of the present invention for the same embodiment as Figure 3, but with another operating state being illustrated.
Figure 6 is a schematic plan view of the rotary actuator of the control system of the present invention for one embodiment.
Figure 7 is a schematic elevational view of a cross-section through a vertical section plane of the rotary actuator of Figure 6 and of a part of the screen to which it is fixed by means of magnetic attraction.
Figure 8 schematically shows a part of the control system of the present invention and a part of the dashboard of a vehicle in which the system is installed before arranging the rotary actuator on the screen thereof, for an embodiment in which the parameters of a multimedia system of the vehicle are to be controlled.
Figure 9 shows the same elements as Figure 8, but once the rotary actuator has already been fixed, by means of magnetic attraction, on the screen thereof, particularly for controlling the volume of the multimedia system.
Figure 10 is similar to Figure 8, but for an embodiment in which the parameters of a temperature-control system of the vehicle are to be controlled.
Figure 11 shows the same elements as Figure 10, but once the rotary actuator has already been fixed, by means of magnetic attraction, on the screen thereof, particularly in a first location, to control the temperature of the left part of the vehicle cabin by means of the temperature-control system thereof.
Figure 12 shows the same elements as Figure 11, but in this case once the rotary actuator has been moved linearly to a second position on the screen, to control the rotational speed of a fan of the temperature-control system of the vehicle.
Figure 13 shows the same elements as Figures 11 and 12, but in this case once the rotary actuator has been moved linearly to a third position on the screen, to control the temperature of the right part of the vehicle cabin by means of the temperature-control system thereof.
Figure 14 schematically shows a part of the control system of the present invention and a part of the dashboard of a vehicle in which the system is installed, for one embodiment for which the system has two screens, and the rotary actuator is arranged in a first location of the smaller screen or additional screen, to control the temperature of the left part of the vehicle cabin by means of the temperature-control system thereof.
Figure 15 shows the same elements as Figure 14, but in this case once the rotary actuator has been moved linearly to a second position on the additional screen, to control the rotational speed of a fan of the temperature-control system of the vehicle.
Figure 16 shows the same elements as Figures 14 and 15, but in this case once the rotary actuator has been moved linearly to a third position on the additional screen, to control the temperature of the right part of the vehicle cabin by means of the temperature-control system thereof.

### Detailed Description of Several Embodiments

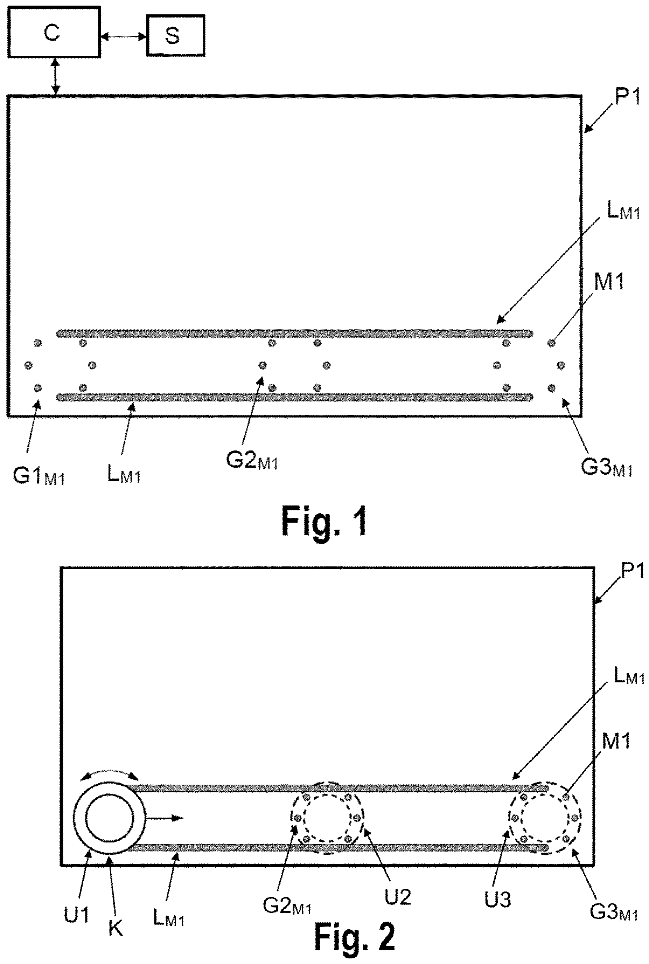

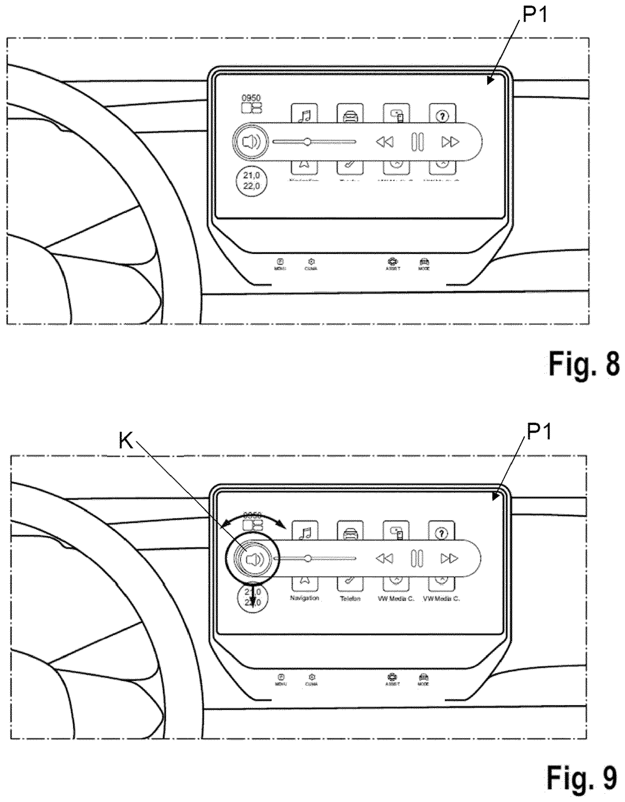

As schematically illustrated in the attached Figures 1 to 5, the control system of the present invention comprises a control panel comprising a screen P1 that displays graphical information (such as information illustrated in Figures 8 to 16, for different non-limiting embodiments) relating to at least one operating parameter or variable of a device.

For the embodiments illustrated by Figures 1 to 5, the screen P1 includes, arranged below it, first elements M1 configured to attract and/or to be attracted magnetically (as they are magnetic or ferromagnetic, for example) forming a first group G1_{M1}, a second group G2_{M1}, and a third group G3_{M1} of first elements M1, spaced linearly apart from one another, and for the illustrated case, run according to annular formations. In that sense, said first elements M1 of each of the first group G1_{M1}, second group G2_{M1}, and third group G3_{M1} are arranged according to a circular distribution on the perimeter thereof. For the example depicted in Figures 1 to 5, six first elements M1 are distributed in a symmetrical and equidistant manner in each of said first group G1_{M1}, second group G2_{M1}, and third group G3_{M1}. In that sense, the first elements M1 of one and the same group are separated from one another, defining different angular positions of the rotary actuator K. The number of first elements M1 can be larger or smaller, according to the number of angular positions desired or on the precision and haptics in the rotary movement of the rotary actuator K with respect to the control panel. These elements M1 have been illustrated in said figures for greater clarity, although in reality they would be concealed by the screen P1 as they are arranged below the same and those figures would show a front face of the screen P1.

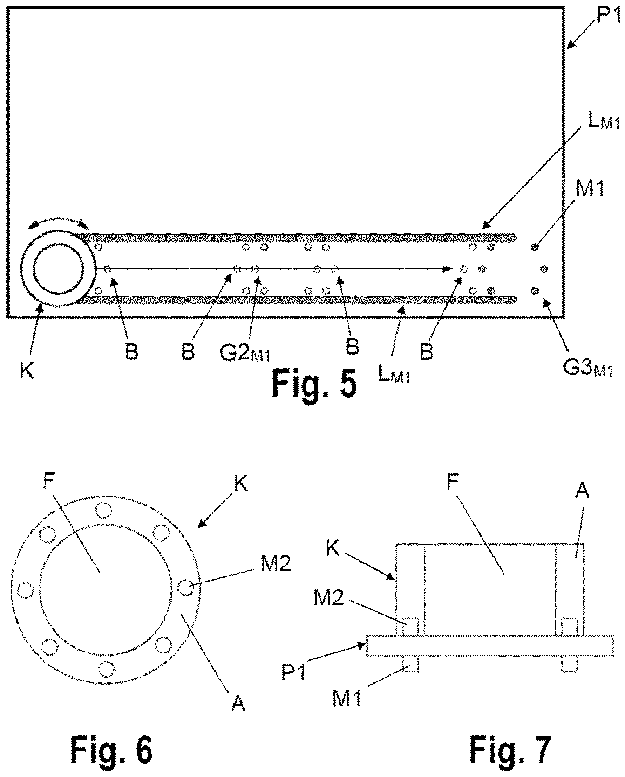

The control system also includes a rotary actuator K which, as illustrated in Figures 6 and 7, comprises second elements M2 configured to attract and/or to be attracted magnetically (as they are magnetic or ferromagnetic, for example), configured and arranged to fix the rotary actuator K to the screen P1 by means of magnetic attraction between the first elements M1 and the second elements M2 with an attractive force that allows the relative rotational movement of the rotary actuator K with respect to the screen P1, to be fixed, alternatively, in different locations, particularly, for the embodiments illustrated in Figures 1 to 5, in a first location U1, a second location U2, and a third location U3 located, respectively, on the first group G1_{M1}, the second group G2_{M1}, and the third group G3_{M1}, and to move on the screen P1 and with respect to the screen in a rotatable manner when it is arranged in each of said locations U1, U2, and U3.

Figure 2 illustrates the rotary actuator K in the first location U1 and it is depicted with a dashed line in the other two possible locations U2 and U3.

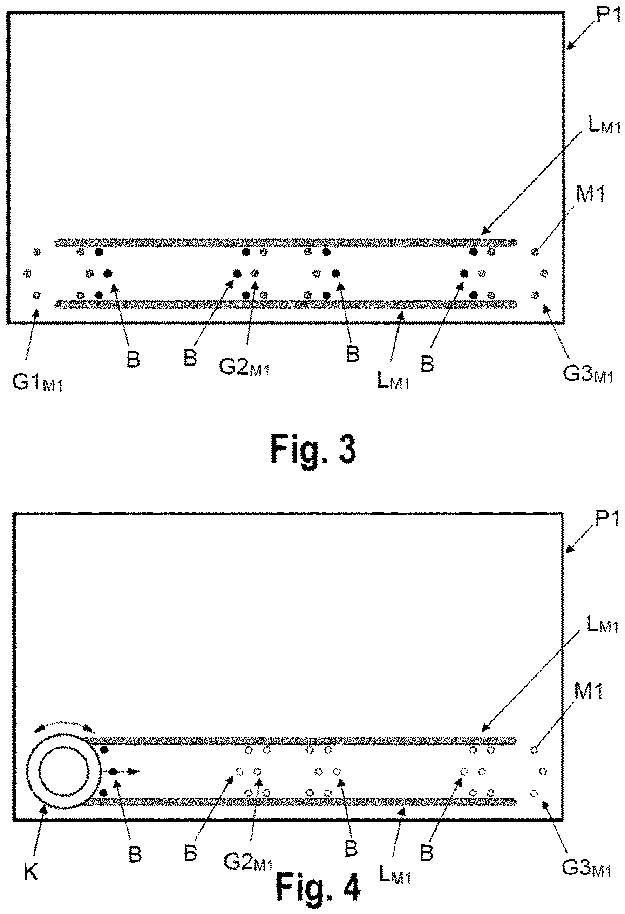

For one embodiment, the first elements M1 are magnets that can be electrically activated by the control unit C, such as electromagnets, with the elements being illustrated in grey when they are activated (Figures 1, 2, and 3) and in white when they are not activated (Figures 4 and 5).

As can be seen in Figures 6 and 7, the second elements M2 are arranged following a circumferential path in a perimeter gripping portion of the rotary actuator K, such that when transitioning, during the rotation of the rotary actuator K, from one position to the subsequent or contiguous angular position, the second elements M2 which were magnetically attracted to the first elements M1 arranged right below the same, as a result of the force of rotation exerted by the user overcoming the magnetic attraction force, a rotational movement of the rotary actuator K is initiated until the second elements M2 are again magnetically attracted to the contiguous first elements M1, with a relative rotation having occurred between the second elements M2 of the rotary actuator K and the first elements M1 of the control panel. The user thus perceives a kind of "click" or a variation in the magnetic force, thereby physically noticing the transition between every two angular positions.

As schematically illustrated in Figure 1, the control system of the present invention also comprises at least one sensor S configured and arranged to detect at least the angular position or the change in the angular position of the rotary actuator K during the relative rotational movement thereof, and a control unit C operatively connected with the at least one sensor S to receive detection signals from the same, and based on the signals, control the operation of the device or devices.

In particular, the control unit C is configured to distinguish, based on the detection signals received from the at least one sensor S, whether the rotary actuator K is arranged in the first location U1, the second location U2, or the third location U3, and based on the same, for the embodiments illustrated by Figures 1 to 5:
- alternatively control the operation of three different operating parameters or variables of the device, associated with the first location U1, the second location U2, and the third U3 location, respectively, such as, for example, three variables of a temperature-control system, such as the temperature of a left part of the cabin, the temperature of the right part of the cabin, or the blowing intensity of the fan; or
- alternatively control the operation of three identical or different operating parameters or variables, associated with the first location U1, the second location U2, and the third U3 location, respectively, of three respective devices, such as, for example, the audio volume of a sound system, the blowing intensity of a fan of an air-conditioning system, or the scale of a map of a navigation system.

For the embodiments illustrated in Figures 1 to 5, the rotary actuator K can also be moved linearly between said locations U1, U2, and U3, although for other less preferred embodiments that are not illustrated, such movement is not possible, but the rotary actuator K (and the first elements M1 and the second elements M2) is configured so that the fixation thereof on the screen P1 is detachable, so it can be removed from one of the locations and arranged in another location by fixing it to the screen P1 again.

For the embodiments illustrated by Figures 1 to 5, in order to allow such linear movement of the rotary actuator K on the screen P1, some of the first elements M1 are arranged below the screen P1 according to two linear arrangements L_{M1} running between the first group G1_{M1}, the second group G2_{M1}, and the third group G3_{M1} of first elements M1, and providing a linear guide for the rotary actuator K to move linearly at least between the different locations, U1, U2, and U3, while it remains fixed on the screen P1 by means of magnetic attraction between the first elements M1 of the linear arrangements L_{M1} and the second elements M2.

According to one embodiment, the at least one sensor S is configured to also detect the direction of rotation of the rotary actuator K during the relative rotational movement thereof, in the first location U1, the second location U2, and the third location U3.

Although not illustrated in the attached figures, for one embodiment, the at least one sensor S comprises sensors arranged below the screen P1, including at least a first sensor or a first group of sensors, arranged below the first location U1, a second sensor or a second group of sensors, arranged below the second location U2, and a third sensor or a third group of sensors, arranged below the third location U3, spaced linearly apart from one another, and the control unit C is configured to distinguish the detection signals received from the sensors S arranged below each of such locations U1, U2, U3, thus knowing in which location the rotary actuator K is arranged, and therefore which parameter or variable to control by means of the rotation thereof.

For an implementation (not illustrated) of said embodiment, at least one of the sensors S is arranged below the screen P1 according to a linear arrangement running between the first group G1_{M1}, the second group G2_{M1}, and the third group G3_{M1} of sensors, and the control unit C is configured to also distinguish the detection signals received from the sensor or sensors of said linear arrangement from the detection signals received from the rest of the sensors, and based on the same, control the operation of another parameter or variable of said device or of another device, other than the mentioned two operating parameters or variables, i.e., carry out the control of the device or devices, based not only on the rotational movements of the rotary actuator K, but also on the linear movements thereof.

As can be seen in Figure 3, for the embodiment illustrated therein, the control system comprises blocking elements B which can be controlled by the control unit C to block the linear movement of the rotary actuator K when it is in any of the locations U1, U2, U3, preventing it from moving linearly on the screen P1, i.e., generating a barrier which prevents such linear movement. Such blocking elements B are, for example, electromagnets arranged below the screen P1 grouped in positions respectively adjacent to the first group G1_{M1}, the second group G2_{M1}, and the third group G3_{M1} of first elements M1, with the control unit C being operatively and electrically connected with the electromagnets to activate/deactivate the same.

The control unit C is configured to determine that the operation to be controlled by arranging the rotary actuator K in the first location U1, the second location U2, or the third location U3 is inactive, and control the blocking elements B to prevent the rotary actuator K from moving linearly to the first location U1, the second location U2, or the third location U3, associated with said inactive operation.

In that sense, as illustrated in Figure 3, the blocking elements B are arranged adjacent to the first elements M1, being configured to generate a repulsive magnetic field that interferes with the linear movement between the first group G1_{M1}, the second group G2_{M1}, and the third group G3_{M1}. However, rotation of the rotary actuator K in the first location U1, the second location U2, or the third location U3 is allowed.

This situation is shown in Figure 4 in which the blocking elements B illustrated in black, i.e., the blocking elements arranged in the first location U1, are activated, thereby preventing the rotary actuator K from moving linearly, but allowing it to move in a rotatable manner, and therefore allowing the control of the parameter or variable to be controlled from the first location U1. Similarly, the blocking elements B adjacent to locations U2 or U3 would be activated to block the linear movement of the rotary actuator K in any of those locations U2, U3.

In that sense, in normal situations, the rotary actuator K can be moved linearly between the different locations U1, U2, U3, as shown in the embodiment of Figure 5. In contrast, when at least one actuation position is inactive (for example, the temperature control of the passenger due to the simultaneous temperature control being inactivated), a repulsive magnetic field is generated in the form of a barrier by means of the blocking elements B which prevents the rotary actuator K form moving to the location corresponding to the inactive actuation position.

For a non-illustrated alternative embodiment, the blocking elements B are the actual first elements M1 of the first group G1_{M1}, the second group G2_{M1}, and the third group G3_{M1}, which are electromagnets, with the control unit C also being configured to control the module of the magnetic field generated by the electromagnets, including a larger module that blocks at least the linear movement of the rotary actuator K, a smaller module that allows the linear movement of the rotary actuator K, or simply deactivate the magnetic field when the functions to be controlled (for whatever reasons) are disabled.

According to the embodiment illustrated in Figures 6 and 7, the rotary actuator K comprises, in a central portion thereof, an optical element F, such as a group of optical fibres configured and arranged to display an image of a graphical representation (with the same, larger, or smaller size, depending on the lattice density of the group of optical fibres) displayed by the screen P1 right below the optical element F. In that sense, the optical element F could be a "fibre optic taper", which allows transferring the content or information depicted on the screen P1, i.e., on the lower surface of the rotary actuator K, to the upper surface of said rotary actuator K. If said optical element F is not included in the rotary actuator K, a user would see the information depicted in a sunken form. In contrast, with the implementation of said optical element F, the graphical information is depicted on the upper surface of the rotary actuator K, without needing additional screens.

Figures 8 to 13 and 14 to 16 show respective embodiments for which the control system is used to control different parameters of the devices of a vehicle, in this case shown in the form of menus and sub-menus on a screen P1 or an additional screen P2.

In particular, Figure 8 illustrates a submenu related to the control of a multimedia system of the vehicle, which will be displayed following a prior selection to access the same, for example, by pressing (in the case that the screen P1 is a touchscreen) a respective icon. Said submenu can be displayed by means of the magnetic linkage between the rotary actuator K and the first group G1_{M1} of first elements M1, determining on the part of the control unit C and by means of the at least one sensor S the magnetic field generated by the magnetic attraction when the rotary actuator K is placed in the first location U1.

Figure 9 illustrates the rotary actuator fixed to the screen P1 right above the icon of a loudspeaker depicted in the submenu of Figure 8. This position could be considered the first location U1 described above in which, in this case, the volume of the multimedia system can be controlled by means of rotating the rotary actuator K. In this case, the rotary actuator K could be moved linearly to other locations in order to control other parameters of the multimedia system such as, for example, the locations where the rewind, pause, and forward icons are arranged, to control the same by means of rotating the rotary actuator K.

The icon of the loudspeaker (and of the rest on which the rotary actuator K is arranged) is displayed on the upper face of the central portion of the rotary actuator K as a result of the optical element F arranged therein.

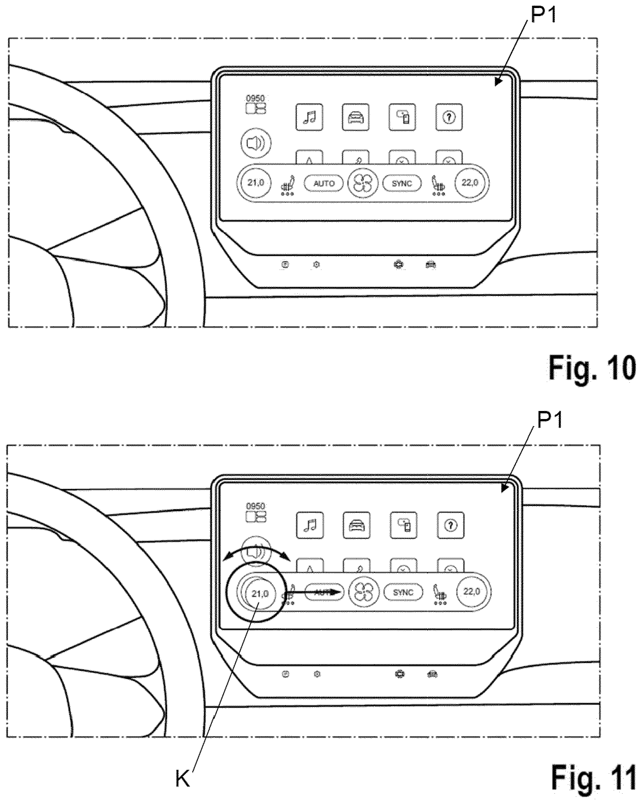

Figure 10 illustrates another submenu, in this case related to the control of a temperature-control system of the vehicle, which will be displayed after a prior selection to access the same, for example, by pressing (in the case that the screen P1 is a touchscreen) a respective icon. Said submenu can be displayed by means of the magnetic linkage between the rotary actuator K and the respective first elements M1, determining on the part of the control unit C and by means of the at least one sensor S the magnetic field generated by the magnetic attraction when the rotary actuator K is placed in the corresponding location.

As can be seen, the submenu has an elongated shape located below the submenu (also having an elongated shape) shown in Figure 8. This means that for this embodiment there are two arrangements of first elements M1 shown in Figures 1 to 5, one for controlling the multimedia system (Figures 8 and 9) and another for controlling the temperature-control system (Figures 10 and 11).

Figure 11 illustrates the rotary actuator K fixed to the screen P1 right above an icon that displays the temperature of the left part of the vehicle cabin depicted in the submenu of Figure 10. This position could be considered the first location U1 described above, in which, in this case, the temperature of the left part of the vehicle cabin can be controlled by means of rotating the rotary actuator K.

To move the rotary actuator from the positions it occupies on the menu in Figure 9 to the position in Figure 11, depending on the embodiment, the rotary actuator is moved linearly on the screen P1 (if necessary, arranging first elements M1 which guide said movement), or in the case that the fixation is detachable, the rotary actuator is removed from one of the positions and fixed to the screen P1 again in another position by means of the magnetic attraction generated between the first elements M1 and the second elements M2.

In this case, the icon which indicates the existing temperature is displayed on the upper face of the central portion of the rotary actuator K as a result of the optical element F arranged therein. This icon will display the value which is set by means of rotating the rotary actuator K, and therefore this new set value will be displayed through the optical element F, so that the passenger in the vehicle can perceived it correctly.

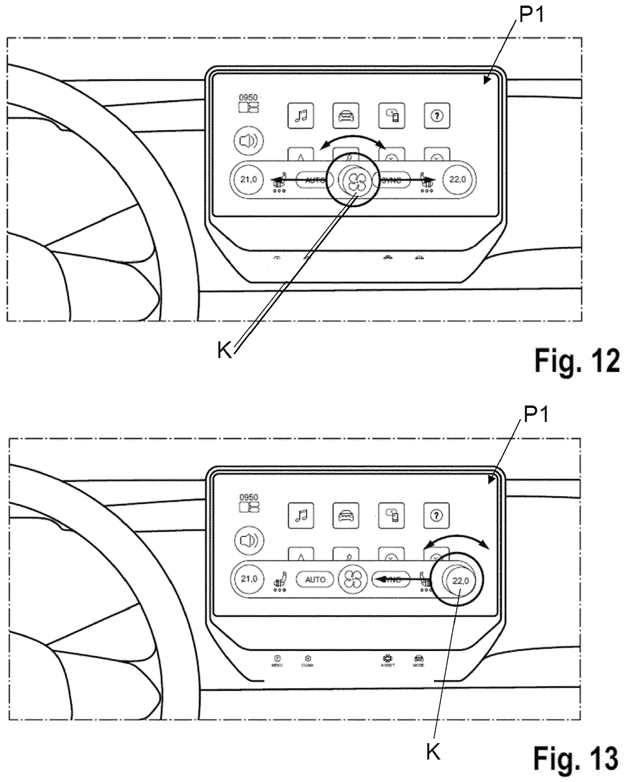

In this case, the rotary actuator K can be moved linearly to other locations in order to control, by means of rotating the rotary actuator, other parameters of the temperature-control system, particularly the location where the icon of a fan is arranged (Figure 12), where this position can be considered the second location U2 described above, in which, in this case, the intensity of the airflow of the air-conditioning system can be controlled by means of rotating the rotary actuator K; and the location where the icon for the temperature of the right part of the vehicle cabin is arranged (Figure 13), where this position can be considered the third location U3 described above, in which, in this case, the temperature of the right part of the vehicle cabin can be controlled by means of rotating the rotary actuator K.

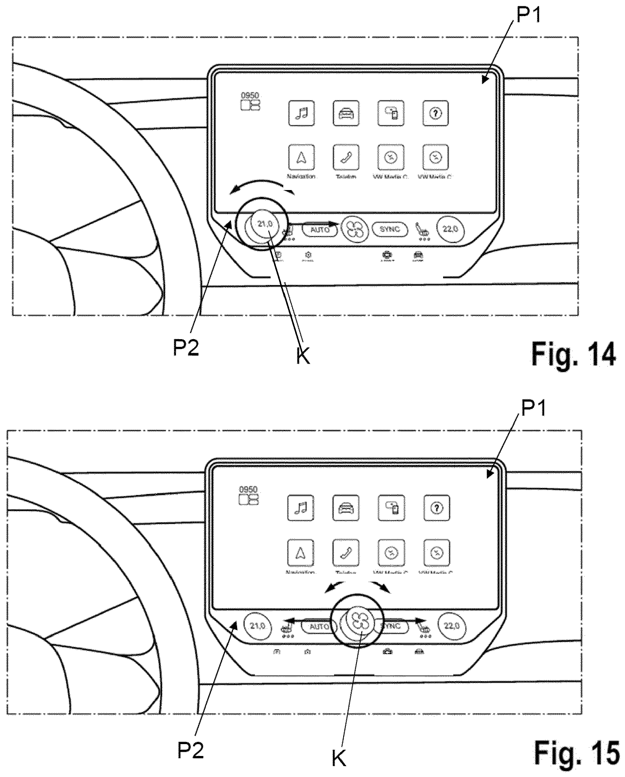

Figures 14 to 16 are similar to Figures 11 to 13, respectively, but in this case for a similar embodiment for which control is performed on a small additional screen P2 which extends from the lower edge of the screen P1. It is observed that in said embodiment, the additional screen P2 is adjacent to the main screen P1. The operation explained in the present embodiment illustrated in Figures 14 to 16 would likewise be valid for devices independent of the vehicle, i.e., where the screen P1 and the additional screen P2 are arranged in an independent manner and separated from one another. To control the operating parameters or variables associated therewith, a single rotary actuator K would be required, which actuator can be magnetically linked in an alternative manner between said screen P1 and the additional screen P2.

In this case, for an implementation of said embodiment, the information illustrated therein, i.e., for example, information relating to the control of the temperature control system, is always displayed on the additional screen P2, whereas for an alternative implementation, this may change, displaying on the additional screen P2 the submenu selected by pressing the corresponding icon displayed on the screen P1, for example, the icon for controlling the multimedia system.

For the embodiment of Figures 14 to 16, the arrangements of first elements M1 are located below the additional screen P2.

For one embodiment, the elements illustrated in Figures 8 to 13 are combined with the elements illustrated in Figures 14 to 16, i.e., the rotary actuator K can be arranged on the screen P1 and the additional screen P2, and can therefore control different parameters. In this case, to enable transitioning from one screen to another, the magnetic fixation on each of the screens P1, P2 of the rotary actuator K is preferably detachable.

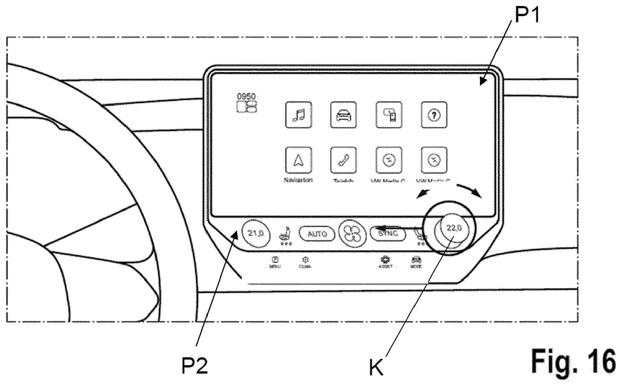

In this case, the rotary actuator K can be moved linearly between the different locations by means of a linear arrangement L_{M1} of first elements M1 arranged below the screen P1 (not depicted in Figures 14 to 16) in order to control different parameters of the temperature-control system by means of rotating the rotary actuator. Particularly, the location where the icon of "21.0°" is arranged (Figure 14), where this position can be considered the first location U1 described above, in which, in this case, the temperature of the left part of the vehicle cabin can be controlled by means of rotating the rotary actuator K. Additionally, the location where the icon of the fan is arranged (Figure 15), where this position can be considered the second location U2 described above, in which, in this case, the intensity of the airflow of the air-conditioning system can be controlled by means of rotating the rotary actuator K. Finally, the location where the icon of "22.0°" is arranged (Figure 16), where this position can be considered the third location U3 described above, in which, in this case, the temperature of the right part of the vehicle cabin can be controlled by means of rotating the rotary actuator K.

A person with skill in the art will be able to introduce changes and modifications in the described embodiments without departing from the scope of the invention as it is defined in the attached claims.

## Claims

1. A control system, comprising:
- a control panel comprising a screen (P1) that displays graphical information relating to at least one operating parameter or variable of a device, wherein said control panel includes, arranged below the same, first elements (M1) configured to attract and/or to be attracted magnetically;
- a rotary actuator (K) comprising second elements (M2) configured to attract and/or to be attracted magnetically, configured and arranged to fix said rotary actuator (K) to said control panel, on said screen (P1), by means of magnetic attraction between the first elements (M1) and the second elements (M2) with an attractive force that allows the relative rotary movement of the rotary actuator (K) with respect to the control panel;
- at least one sensor (S) configured and arranged to detect at least the angular position or a change in the angular position of said rotary actuator (K) during said relative rotary movement of the same; and
- a control unit (C) operatively connected with said at least one sensor (S) to receive detection signals from the same, and based on the signals, to control the operation of said device, in relation to said at least one operating parameter or variable;
the control system being **characterised in that**:
- the first elements (M1) are arranged below the screen (P1), forming at least a first group (G1M1) and a second group (G2M1) of first elements (M1), spaced linearly apart from one another;
- the rotary actuator (K) is configured to be fixed to the screen (P1), alternatively, in at least a first location (U1) and a second location (U2) located, respectively, on said first group (G1M1) and second group (G2M1), and to move on the screen (P1) and with respect to the screen:
- in a rotatable manner when it is arranged in said first location (U1), and
- in a rotatable manner when it is arranged in said second location (U2);
and
- the control unit (C) is configured to distinguish, based on the detection signals received from the at least one sensor (S), whether the rotary actuator (K) is arranged in the first location (U1) or in the second location (U2), and based on the same:
- alternatively control the operation of two different operating parameters or variables of said device, associated with the first location (U1) and the second location (U2), respectively; or
- alternatively control the operation of two identical or different operating parameters or variables, associated with the first location (U1) and the second location (U2), respectively, of two respective devices.

2. The control system according to any one of the claims, wherein at least one sensor (S) is configured to also detect the direction of rotation of the rotary actuator (K) during the relative rotational movement of the same, both in the first location (U1) and in the second location (U2).

3. The control system according to claim 1 or 2, wherein the rotary actuator (K) is configured to be fixed to the screen (P1) and to move on and with respect to the screen linearly between said first location (U1) and said second location (U2).

4. The control system according to claim 3, wherein one or more of the first elements (M1) are arranged below the screen (P1) according to at least one linear arrangement (L_{M1}) running at least between the first group (G1M1) and the second group (G2_{M1}) of first elements (M1), and providing a linear guide for the rotary actuator (K) to move linearly at least between the first location (U1) and the second location (U2) while it remains fixed on the screen (P1) by means of magnetic attraction between the first elements (M1) of said linear arrangement (L_{M1}) and the second elements (M2).

5. The control system according to any one of the claims, wherein the at least one sensor (S) comprises sensors arranged below the screen (P1), including at least a first sensor or a first group of sensors, arranged below the first location (U1), and a second sensor or a second group of sensors, arranged below the second location (U2), spaced linearly apart from one another, and wherein the control unit (C) is configured to distinguish the detection signals received from the first sensor or sensors in the first group from the signals received from the second sensor or sensors in the second group.

6. The control system according to claim 5 when it depends on claim 3 or claim 4, wherein at least one of said sensors is arranged below the screen (P1) according to at least one linear arrangement running at least between the first group and the second group of sensors, and wherein the control unit (C) is configured to also distinguish the detection signals received from the sensor or sensors of said linear arrangement from the detection signals received from the rest of the sensors, and based on the same, control the operation of another parameter or variable of said device or of another device, other than said two operating parameters or variables.

7. The control system according to claim 3 or any of claims 4 to 6 when they depend on claim 3, comprising blocking elements (B) which can be controlled by said control unit (C) to block the linear movement of the rotary actuator (K) when it is in said first location (U1) or second location (U2), preventing it from moving linearly on the screen (P1), and/or to block the rotary movement of the rotary actuator (K) when it is in the first location (U1) or the second location (U2), preventing it from moving according to a rotary movement on the screen (P1).

8. The control system according to claim 7, wherein the control unit (C) is configured to determine that the operation to be controlled by arranging the rotary actuator (K) in the first location (U1) or in the second location (U2) is inactive, and control said blocking elements (B) to prevent the rotary actuator (K) from moving linearly to the first location (U1) or the second location (U2), associated with said inactive operation, and/or to prevent the rotary actuator (K) from moving in a rotatable manner in said first location (U1) or second location (U2), associated with said inactive operation.

9. The control system according to claim 8, wherein the blocking elements (B) are electromagnets arranged below the screen (P1) grouped in positions respectively adjacent to the first group (G1M1) and the second group (G2_{M1}) of first elements (M1), the control unit (C) being operatively and electrically connected with said electromagnets to activate/deactivate the same.

10. The control system according to any one of the preceding claims, wherein the first elements (M1) are electromagnets, the control unit (C) being operatively and electrically connected with said electromagnets to at least activate/deactivate the same.

11. The control system according to claim 10 when it depends on claim 8, wherein the blocking elements (B) are the actual first elements (M1) of the first group (G1M1) and the second group (G2_{M1}) of first elements (M1), which are electromagnets, the control unit (C) also being configured to control the module of the magnetic field generated by the electromagnets, including a larger module that blocks at least the linear movement of the rotary actuator (K) and a smaller module that allows the linear movement of the rotary actuator (K), and/or including a larger module that blocks at least the rotary movement of the rotary actuator (K) and a smaller module that allows the rotary movement of the rotary actuator (K).

12. The control system according to any one of the preceding claims, wherein the rotary actuator (K) comprises, in a central portion thereof, an optical element (F) configured and arranged to display an image of a graphical representation displayed by the screen (P1) right below said optical element (F).

13. The control system according to any one of the claims, wherein the rotary actuator (K), the first elements (M1) and the second elements (M2) are configured so that the fixation of the rotary actuator (K) is detachable.

14. The control system according to claim 13, comprising a support surface or an additional screen (P2), which also includes, arranged below the same:
- first elements (M1) configured to attract and/or to be attracted magnetically, for the detachable fixation of the rotary actuator (K), by means of magnetic attraction between the first elements (M1) and the second elements (M2) with an attractive force that allows the relative rotational movement of the rotary actuator (K) with respect to said support surface or additional screen (P2); and
- at least one sensor (S) configured and arranged to detect at least the angular position or a change in the angular position of said rotary actuator (K) during said relative rotational movement thereof with respect to the support surface or additional screen (P2);
the control unit (C) being operatively connected with said at least one sensor (S) to receive detection signals from the same, and in response to receiving said detection signals and to the value thereof, allow and carry out, respectively, the control of an operating parameter or variable of said device or of another device.

15. The control system according to any one of the claims, wherein said device or devices are devices of a vehicle.
